(19) Europäisches Patentamt / European Patent Office / Office européen des brevets

(11) **EP 4 390 853 A1**

(12) **EUROPEAN PATENT APPLICATION**
published in accordance with Art. 153(4) EPC

(43) Date of publication:
**26.06.2024 Bulletin 2024/26**

(21) Application number: **23818812.2**

(22) Date of filing: **10.04.2023**

(51) International Patent Classification (IPC):
*G06T 15/02* (2011.01)

(52) Cooperative Patent Classification (CPC):
**G06T 15/20; G06T 19/20;** G06T 2219/2021

(86) International application number:
**PCT/CN2023/087264**

(87) International publication number:
**WO 2023/236644 (14.12.2023 Gazette 2023/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.06.2022 CN 202210648451**

(71) Applicant: **Tencent Technology (Shenzhen)
Company Limited
Shenzhen, Guangdong, 518057 (CN)**

(72) Inventor: **HU, Kaimo
Shenzhen, Guangdong 518057 (CN)**

(74) Representative: **Nederlandsch Octrooibureau
P.O. Box 29720
2502 LS The Hague (NL)**

(54) **MODEL PROCESSING METHOD AND APPARATUS, DEVICE, COMPUTER-READABLE STORAGE MEDIUM, AND COMPUTER PROGRAM PRODUCT**

(57) The present application provides a model processing method and apparatus, a device, and a computer-readable storage medium. The method comprises: acquiring model information of a three-dimensional model to be processed and at least one preset angle of view; on the basis of the model information, determining a model visible region of the three-dimensional model which corresponds to the at least one angle of view; on the basis of the model visible region corresponding to the at least one angle of view, determining a model visible region corresponding to the three-dimensional model; and generating a processed three-dimensional model by using the model visible region corresponding to the three-dimensional model.

FIG. 4

**Description**

RELATED APPLICATION

This application is proposed based on Chinese Patent Application No. 202210648451.0, filed on June 09, 2022, and claims priority to the Chinese Patent.

FIELD OF THE TECHNOLOGY

This application relates to the field of computer science and technology, and in particular, to a model processing method and apparatus, a device, and a computer-readable storage medium.

BACKGROUND OF THE DISCLOSURE

Three-dimensional modeling based on original drawings is an essential step in the production of virtual objects. Its process is substantially as follows: (1) A concept designer draws, based on conceptual design, a character model including the character's gender, clothing, hair accessories, body shape, and even appearance, props, and other accessories. These designs are often presented in two-dimensional original drawings at multi-view angles. (2) A modeler creates a three-dimensional model corresponding to the original drawings using software such as 3Dmax, Zbrush, and Maya based on the creative draft of the concept designer. The modeler often needs to create corresponding medium-, high-, and low-precision models for the same model to adapt to different application scenarios, such as on- and off-site scenarios.

In the foregoing process, it is difficult to automate step (1); while for step (2), the modeling based on original drawings is automated through deep networks in the related art. Methods based on deep learning often require a large amount of training data. In this case, a common method is to render a three-dimensional model that carries texture information into a plurality of two-dimensional original drawings at different view angles, and train a network based on these two-dimensional original drawings and the three-dimensional model. However, some invisible regions exist on the three-dimensional model, and consequently produce redundant data on the three-dimensional model, which affects two-dimensional rendering efficiency and model training efficiency.

SUMMARY

Embodiments of this application provide a model processing method and apparatus, a device, and a computer-readable storage medium, which can reduce the model data volume, and therefore reduce the computing amount of model processing, increasing the processing efficiency.

Technical solutions in the embodiments of this application are implemented as follows:

An embodiment of this application provides a model processing method, applied to a computer device, and the method including:

obtaining model information of a to-be-processed three-dimensional model and at least one pre-set view angle;

determining, for each of the at least one pre-set view angle, a visible model region of the three-dimensional model based on the model information to obtain at least one visible model region corresponding to the at least one view angle;

determining a visible model portion corresponding to the three-dimensional model based on the at least one visible model portion corresponding to the at least one view angle; and

generating a processed three-dimensional model based on the visible model portion corresponding to the three-dimensional model.

An embodiment of this application provides a model processing apparatus, including:

a first obtaining module, configured to obtain model information of a to-be-processed three-dimensional model and at least one pre-set view angle;

a first determining module, configured to determine, for each of the at least one pre-set view angle, a visible model region of the three-dimensional model based on the model information to obtain at least one visible model region corresponding to the at least one view angle;

a first merging module, configured to merge the at least one visible model region corresponding to the at least one view angle to obtain a visible model portion corresponding to the three-dimensional model; and

a model generation module, configured to generate a processed three-dimensional model based on the visible model portion corresponding to the three-dimensional model.

An embodiment of this application provides a computer device, including:

a memory, configured to store an executable instruction; and

a processor, configured to execute the executable instruction stored in the memory to implement the method provided in the embodiments of this application.

An embodiment of this application provides a computer-readable storage medium, storing an executable instruction. When the executable instruction is executed by a processor, the model processing method provided in the embodiments of this application is implemented.
An embodiment of this application provides a computer program product, including a computer program or an instruction. When the computer program or the instruction is executed by a processor, the model processing method provided in the embodiments of this application is implemented.
The embodiments of this application have the following beneficial effects:
First, model information of a to-be-processed three-dimensional model and at least one preset view angle are obtained. The at least one view angle may be a front view angle, a rear view angle, a left view angle, a right view angle, or certainly any other view angle. Next, a visible model region corresponding to each view angle of the three-dimensional model is determined based on the model information of the three-dimensional model. The visible model region corresponding to each view angle is a region of the three-dimensional model that is visible at the view angle, excluding a region that is occluded at the view angle. Then, a visible model portion corresponding to the three-dimensional model is determined based on the at least one visible model region corresponding to the at least one view angle, and a processed three-dimensional model is generated based on the visible model portion corresponding to the three-dimensional model. In other words, the processed three-dimensional model includes only the visible model region at each view angle, with no invisible region. Therefore, the data volume of the model is reduced, so that the resource overheads and computing amount of processing equipment are reduced in subsequent processing of the processed three-dimensional model, increasing the processing efficiency.

BRIEF DESCRIPTION OF THE DRAWINGS

FIG. 1A is a schematic diagram of a 2D lowest envelope.

FIG. 1B is a schematic diagram of a 3D lowest envelope.

FIG. 1C is a schematic diagram of a result of constrained Delaunay triangulation.

FIG. 1D is a schematic diagram of a two-dimensional Boolean intersection operation and a two-dimensional Boolean union operation.

FIG. 2 is a schematic diagram of a network architecture of a model processing system 100 according to an embodiment of this application.

FIG. 3 is a schematic diagram of a structure of a server according to an embodiment of this application.

FIG. 4 is a schematic implementation flowchart of a model processing method according to an embodiment of this application.

FIG. 5A is a schematic implementation flowchart of determining a visible model region corresponding to each view angle according to an embodiment of this application.

FIG. 5B is a schematic diagram of a cube as a three-dimensional model for rotation according to an embodiment of this application.

FIG. 6 is a schematic implementation flowchart of performing triangulation on a merged region corresponding to an i<sup>th</sup> triangle mesh according to an embodiment of this application.

FIG. 7 is another schematic implementation flowchart of a model processing method according to an embodiment of this application.

FIG. 8 is a schematic diagram of a processing result obtained through model processing by a model processing method according to an embodiment of this application.

FIG. 9 is a schematic diagram of a reconstruction result of a training model using a processed three-dimensional model obtained by a model processing method according to an embodiment of this application as training data.

DESCRIPTION OF EMBODIMENTS

To make the objectives, technical solutions, and advantages of this application clearer, the following further describes this application in detail with reference to the accompanying drawings. The described embodiments are not to be considered as a limitation to this application. All other embodiments obtained by a person of ordinary skill in the art without creative efforts shall fall within the protection scope of this application.
In the following description, the term "some embodiments" describes subsets of all possible embodiments, but it may be understood that "some embodiments" may be the same subset or different subsets of all the possible embodiments, and can be combined with each other without conflict.
In the following description, the term "first/second/third" is merely intended to distinguish between similar objects, but does not indicate a particular order of the objects. It may be understood that "first/second/third" can be interchanged in a particular order or sequence where permitted, so that the embodiments of this application described herein can be implemented in an order other than that illustrated or described herein.
Unless otherwise defined, all technical and scientific terms used in this specification have the same meaning as would normally be understood by a person skilled in the art of this application. The terms used in this specification are only for describing the embodiments of this application, but are not intended to limit this application.
Before the embodiments of this application are further described in detail, a description is made on nouns and terms in the embodiments of this application, and the nouns and terms in the embodiments of this application are applicable to the following explanations.

(1) X-monotone segments. For one polyline, if each vertical line intersects the polyline on at most one point, the polyline is referred to as the x-monotone segment.

(2) XY-monotone surfaces. For one curved surface, if each vertical line intersects the curved surface on at most one point, the curved surface is referred to as the xy-monotone surface.

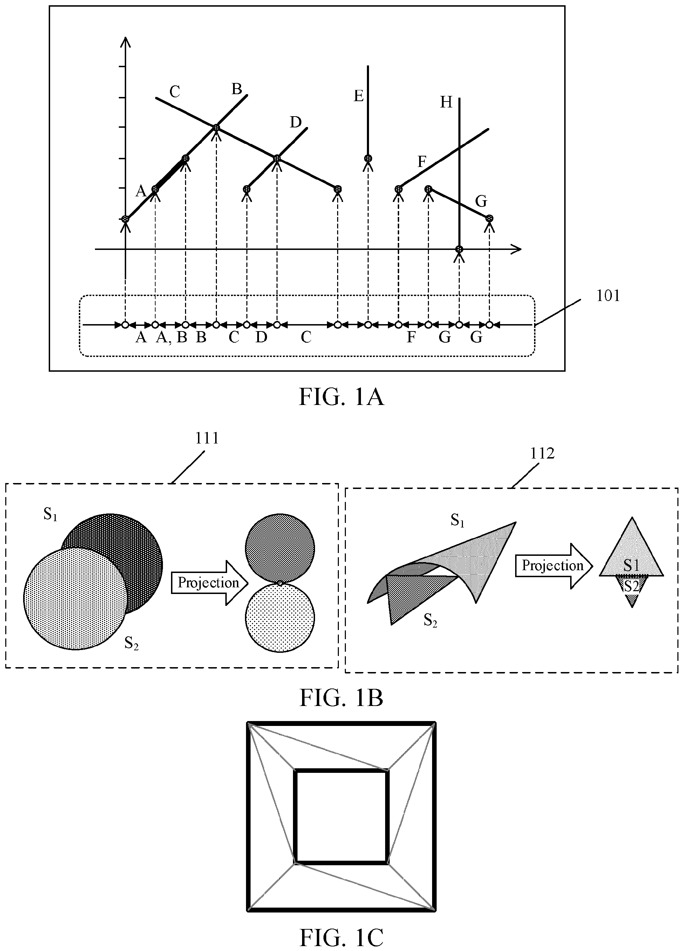

(3) 2D lowest envelope (2D Envelope), defined on a lower boundary of a two-dimensional primitive, including a set of continuous or discontinuous x-monotone segments on a two-dimensional plane. If a horizontal line L (as shown by line segments in a region 101 in FIG. 1A) is defined underneath the two-dimensional primitive, projections of these x-monotone segments on L form complete division of a projection of the entire two-dimensional primitive on L.

(4) 3D lowest envelope (3D Envelope), natural extension of the 2D lowest envelope in three-dimensional space. It is defined on a lower boundary of a three-dimensional primitive and includes xy-monotone surfaces in the three-dimensional space. If a horizontal plane P is defined underneath the three-dimensional primitive, projections of these xy-monotone surfaces on P form complete division of a projection of the entire three-dimensional primitive on P. For example, in FIG. 1B, lowest envelopes of two tangent spheres in a left panel 111 are two hemispheres formed by lower half parts of the two spheres, and projections of the two hemispheres on an xy plane are two tangent circles. Because a semicircular conical surface and a triangle shown in a right panel 112 do not coincide in a z direction, their lowest envelopes are a semicircular conical surface and a triangle, and projections thereof on the xy plane are two tangent triangles.

(5) Constrained Delaunay triangulation. Delaunay triangulation of a point set P on a plane is triangulation DT(P), so that no point in P is strictly inside a circumcircle of any triangle in DT(P). The Delaunay triangulation maximizes the minimum angle of the triangles in the triangulation and avoids "extremely thin" triangles as much as possible. The constrained Delaunay triangulation refers to Delaunay triangulation with some constrained edges given. For example, if edges of an outer boundary and an inner hole of a hollow-square polygon with a hole in FIG. 1C are used as constrained edges (as shown by black bold line segments), a Delaunay triangulation result thereof is triangles formed by the black bold line segments and gray line segments.

(6) Polygon (with holes): a two-dimensional bounded plane graph including an outer boundary (formed by polygons with vertexes arranged counterclockwise) and several holes inside the outer boundary (formed by polygons with vertexes arranged clockwise).

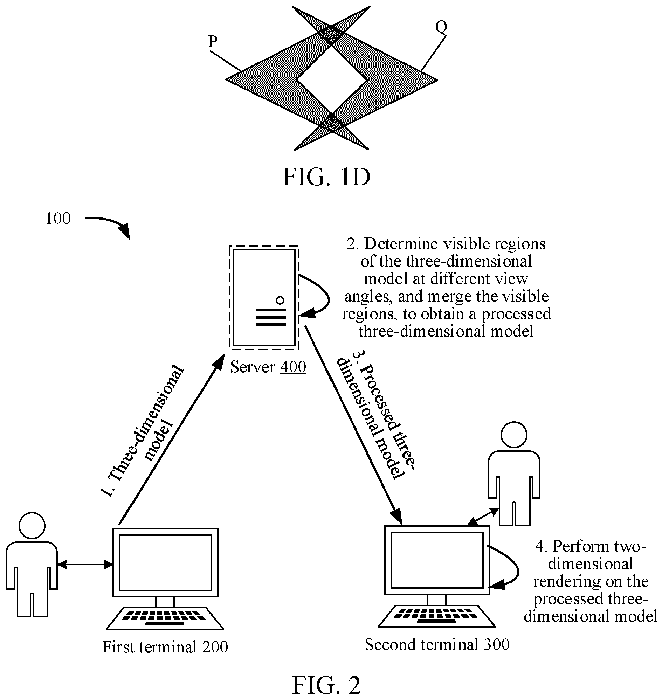

(7) Two-dimensional Boolean operation (2D Boolean Operation): Given polygons P and Q, similar to sets, Boolean operations such as intersection, union, difference, symmetric difference, and complement can be defined. The Boolean union is to merge P and Q into a new region, which is formally defined as R = P U Q . FIG. 1D shows a visual example of Boolean operations of two-dimensional polygons. In FIG. 1D, a dark gray part is an intersection of P and Q, and the dark gray part and a light gray part together form a union of P and Q.

The embodiments of this application provide a model processing method and apparatus, a device, and a computer-readable storage medium, which can reduce the model data volume. The following describes exemplary applications of a computer device provided in the embodiments of this application. The device provided in the embodiments of this application may be implemented as a user terminal of various types, for example, a notebook computer, a tablet computer, a desktop computer, a set-top box, or a mobile device (such as a mobile phone, a portable music player, a personal digital assistant, a specialized message device, or a portable game device), or may be implemented as a server. The following describes exemplary applications when the device is implemented as a server.

Referring to FIG. 2, FIG. 2 is a schematic diagram of a network architecture of a model processing system 100 according to an embodiment of this application. As shown in FIG. 2, the network architecture includes: a first terminal 200, a second terminal 300, and a server 400. A communication connection is established between the first terminal 200 and the server 400 through a network (not shown in FIG. 2), and a communication connection is established between the second terminal 300 and the server 400 through a network (not shown in FIG. 2). The network may be a wide area network, a local area network, or a combination thereof.

The first terminal 200 may be a model design terminal. A model designer may design a three-dimensional model of a virtual object using the first terminal 200, and may design three-dimensional models at different view angles. Then, the first terminal 200 sends the models at different view angles to the server 400. The server 400 obtains model information at different view angles; determines a visible model region corresponding to each view angle based on model information at each view angle; merges visible model regions corresponding to all the view angles to obtain a visible model portion corresponding to the three-dimensional model; and generates a processed three-dimensional model based on the visible model portion corresponding to the three-dimensional model. The visible model portion corresponding to the three-dimensional model may refer to a model portion obtained by merging visible model regions corresponding to different view angles. The server 400 then sends the processed three-dimensional model to the second terminal 300. The second terminal 300 may be a rendering terminal. The second terminal 300 performs two-dimensional rendering at multi-view angles on the processed three-dimensional model. The processed three-dimensional model includes only the visible region of the model. In this case, the model data volume is reduced compared with the original three-dimensional model. Therefore, two-dimensional rendering needs to be performed only on the visible region, thereby reducing the resource overheads of two-dimensional rendering and increasing the rendering efficiency.

In some embodiments, the server 400 may be an independent physical server, or may be a server cluster or distributed system including a plurality of physical servers, or may be a cloud server providing basic cloud computing services such as cloud services, cloud databases, cloud computing, cloud functions, cloud storage, network services, cloud communication, middleware services, domain name services, security services, CDN, and big data and artificial intelligence platforms. The first terminal 200 and the second terminal 300 may be smartphones, tablet computers, notebook computers, desktop computers, smart speakers, smartwatches, on-board smart terminals, or the like, which are not limited thereto. The terminal and the server may be directly or indirectly connected through wired or wireless communication. This is not limited in the embodiments of this application.

In some embodiments, the network architecture of the model processing system may include only the first terminal and the second terminal. After determining that a model design is completed, the first terminal determines visible model regions at different view angles based on model information at different view angles, merges the visible model regions at different view angles to obtain a processed three-dimensional model, and sends the processed three-dimensional model to the second terminal. Then, the second terminal performs two-dimensional rendering on the processed three-dimensional model.

In some embodiments, the network architecture of the model processing system may include only the first terminal and the server. The first terminal may be a model training terminal. The first terminal obtains sample data. The sample data includes two-dimensional original drawings at multi-view angles of a plurality of models and three-dimensional models at multi-view angles of the plurality of models. The first terminal sends the three-dimensional models at multi-view angles of the plurality of models to the server. For each model, the server determines a visible region at each view angle based on model information at each view angle, merges visible regions at all the view angles to obtain a processed three-dimensional model, and sends the processed three-dimensional model to the first terminal. The first terminal performs prediction processing on the two-dimensional original drawings at multi-view angles of the plurality of models using a preset neural network model to correspondingly obtain a plurality of predicted three-dimensional models, and trains the neural network model using the processed three-dimensional model and the plurality of predicted three-dimensional models to obtain a trained neural network model. As the complexity and ambiguity of output of the network model are reduced during training, the training speed of the network model can be increased, and the training time can be shortened.

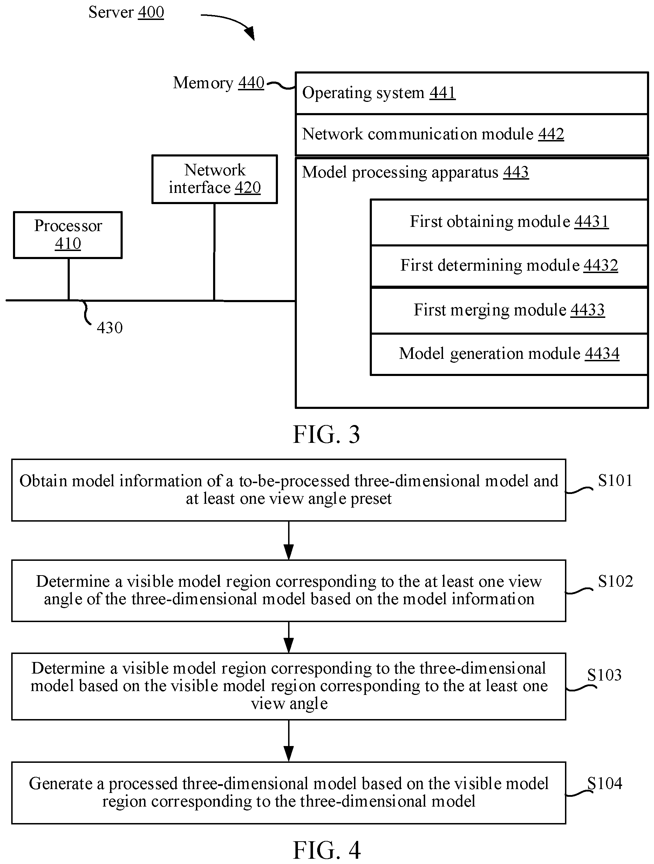

Referring to FIG. 3, FIG. 3 is a schematic diagram of a structure of a server 400 according to an embodiment of this application. The server 400 shown in FIG. 3 includes: at least one processor 410, at least one network interface 420, a bus system 430, and a memory 440. Components in the server 400 are coupled together by the bus system 430. It may be understood that the bus system 430 is configured to implement connection and communication between the components. In addition to a data bus, the bus system 430 further includes a power bus, a control bus, and a state signal bus. However, for ease of clear description, all types of buses in FIG. 3 are marked as the bus system 430.

The processor 410 may be an integrated circuit chip and has a signal processing capability, such as a general-purpose processor, a digital signal processor (DSP), another programmable logic device, a discrete gate or a transistor logic device, or a discrete hardware component. The general-purpose processor may be a microprocessor or any conventional processor.

The memory 440 may be a removable memory, a non-removable memory, or a combination thereof. For example, a hardware device includes a solid-state memory, a hard disk drive, an optical disc drive, and the like. The memory 440 alternatively includes one or more storage devices physically located away from the processor 410.

The memory 440 includes a volatile memory or a non-volatile memory, or may include both a volatile memory and a non-volatile memory. The non-volatile memory may be a read-only memory (ROM). The volatile memory may be a random access memory (RAM). The memory 440 described in this embodiment of this application is intended to include any proper type of memory.

In some embodiments, the memory 440 can store data to support various operations. Examples of the data include programs, modules, and data structures or subsets or supersets thereof. The following makes an exemplary description.

An operating system 441 includes a system program for processing various basic system services and executing hardware-related tasks, for example, a frame layer, a core library layer, or a drive layer for implementing various basic services and processing hardware-based tasks.

A network communication module 442 is configured to reach other computing devices through one or more (wired or wireless) network interfaces 420. For example, the network interface 420 includes Bluetooth, wireless fidelity (Wi-Fi), a universal serial bus (USB), and the like.

In some embodiments, the apparatus provided in the embodiments of this application may be implemented by software. FIG. 3 shows a model processing apparatus 443 stored in the memory 440. The model processing apparatus 443 may be software in the form of a program or a plug-in, and includes the following software modules: a first obtaining module 4431, a first determining module 4432, a first merging module 4433, and a model generation module 4434. These modules are logical and therefore can be combined in any way or further split depending on achieved functions. The following describes functions of the modules.

In some other embodiments, the apparatus provided in the embodiments of this application may be implemented by hardware. For example, the apparatus provided in the embodiments of this application may be a processor in the form of a hardware decoding processor, and is programmed to perform the model processing method provided in the embodiments of this application. For example, the processor in the form of the hardware decoding processor may use one or more application-specific integrated circuits (ASICs), a DSP, a programmable logic device (PLD), a complex PLD (CPLD), a field-programmable gate array (FPGA), or another electronic element.

The model processing method provided in the embodiments of this application is described with reference to exemplary applications and implementations of the server provided in the embodiments of this application.

An embodiment of this application provides a model processing method, applied to a computer device. The computer device may be a terminal or may be a server. In this embodiment of this application, an example in which the computer device is a server is used for description. FIG. 4 is a schematic implementation flowchart of a model processing method according to an embodiment of this application. Steps of the model processing method according to this embodiment of this application are described with reference to FIG. 4.

Step S101: Obtain model information of a to-be-processed three-dimensional model and at least one preset view angle.

When the model processing method according to this embodiment of this application is implemented by a server, the model information of the to-be-processed three-dimensional model may be sent to the server by a terminal. The to-be-processed three-dimensional model may be a model for performing two-dimensional original drawing rendering or may be a training model for training a network model. The model information of the to-be-processed three-dimensional model may include vertex identifiers and vertex indexes of a plurality of triangle meshes that form the three-dimensional model. Vertex coordinates of the triangle meshes can be obtained based on the vertex indexes. The at least one view angle may be a view angle when the three-dimensional model is viewed from different angles, for example, may include at least one of a front view angle, a rear view angle, a left view angle, and a right view angle, or certainly may be any other view angle. For example, the front view angle is a view angle when a camera is located directly in front of the model.

Step S102: Determine, for each of the at least one pre-set view angle, a visible model region of the three-dimensional model based on the model information to obtain at least one visible model region corresponding to the at least one view angle.

A visible model region corresponding to a view angle is a model region that can be viewed by the camera from the view angle. In other words, the respective visible model region is a region/portion of the three-dimensional model being viewed under the corresponding pre-set view angle. When the step is implemented, the three-dimensional model may be first rotated based on a camera direction vector of each view angle to a bottom view angle, and a 3D lowest envelope of the three-dimensional model and a two-dimensional projection of the 3D lowest envelope may be determined. A projection face on the two-dimensional projection is obtained by projecting a visible region onto a two-dimensional plane. In this case, after the two-dimensional projection is obtained, a visible region that corresponds to each projection face in the two-dimensional projection and that is on the three-dimensional model may be further determined, and a visible region included in each triangle mesh in the three-dimensional model may be determined based on the visible region corresponding to each projection face. In this way, the visible model region corresponding to each view angle is obtained.

Step S103: Determine a visible model portion corresponding to the three-dimensional model based on the at least one visible model region corresponding to the at least one view angle.

Merging is not required in this step when one view angle is preset in step S101, and the visible model region corresponding to the view angle is directly determined as the visible model portion corresponding to the three-dimensional model. When two or more view angles are preset in step S101, as the visible regions included in all triangle meshes at different view angles have been determined in step S102, to implement this step, the visible regions of the triangle meshes at different view angles are transformed into two-dimensional space, a merged region of the visible regions of the triangle meshes at different view angles is determined in the two-dimensional space, and the merged region is transformed into three-dimensional space, to obtain a merged region of the triangle meshes in the three-dimensional space. As the three-dimensional model is formed by the triangle meshes, after the visible regions of the triangle meshes in the three-dimensional space are obtained, the visible model portion corresponding to the three-dimensional model is obtained. For example, the merged region of the visible model regions corresponding to different view angles is determined as the visible model portion corresponding to the three-dimensional model.

Step S104: Generate a processed three-dimensional model based on the visible model portion corresponding to the three-dimensional model.

In this embodiment of this application, the visible model portion is characterized by vertex identifiers and vertex indexes of each region. Therefore, after the vertex identifiers and the vertex indexes of each region are obtained, vertex coordinates may be determined based on the vertex indexes, to generate the processed three-dimensional model.

In some embodiments, when the to-be-processed three-dimensional model may be a model for performing two-dimensional original drawing rendering, after the processed three-dimensional model is obtained, texture mapping may be performed on the processed three-dimensional model to map the processed three-dimensional model to the two-dimensional space for two-dimensional rendering. Since the processed three-dimensional model includes only the visible region of the model, two-dimensional rendering needs to be performed only on a two-dimensional polygon corresponding to the visible region of the model, thereby reducing the amount of rendering data to be processed and increasing the rendering efficiency. When the to-be-processed three-dimensional model is a training model for training a network model, the server may send the processed three-dimensional model to the terminal, and the terminal trains the network model based on two-dimensional training original drawings at multi-view angles and the processed three-dimensional model, to obtain a trained neural network model. As the complexity and ambiguity of output of the network model are reduced during training, the training speed of the network model can be increased, and the training time can be shortened.

In the model processing method provided in this embodiment of this application, first, model information of a to-be-processed three-dimensional model and at least one preset view angle are obtained. The at least one view angle may be a front view angle, a rear view angle, a left view angle, a right view angle, or certainly any other view angle. Next, a visible model region corresponding to the at least one view angle of the three-dimensional model is determined based on the model information of the three-dimensional model. The visible model region corresponding to each view angle is a model region/portion that is visible at the view angle, excluding a model region that is occluded at the view angle. Then, a visible model portion corresponding to the three-dimensional model is determined based on the visible model region corresponding to the at least one view angle, and a processed three-dimensional model is generated based on the visible model portion corresponding to the three-dimensional model. In other words, the processed three-dimensional model includes only the visible model region at each view angle, with no invisible region. Therefore, the data volume of the model is reduced, so that the resource overheads and computing amount of processing equipment are reduced in subsequent processing of the processed three-dimensional model, increasing the processing efficiency.

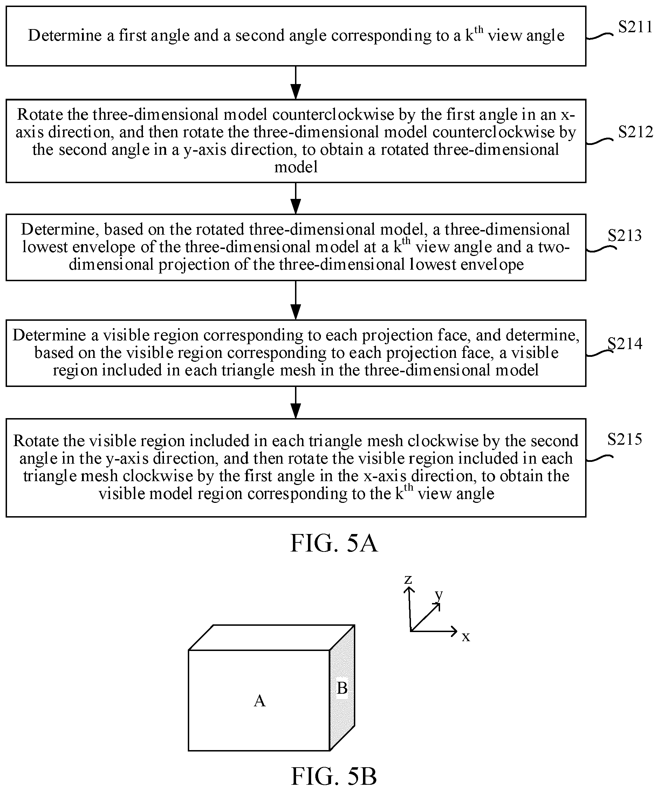

In some embodiments, step S102 "determine a visible model portion corresponding to each view angle based on the model information" may be implemented by step S211 to step S215 shown in FIG. 5A. The following describes the steps with reference to FIG. 5A.

Step S211: Determine a first angle and a second angle corresponding to a k$^{th}$ view angle.

Herein, k is an integer greater than or equal to 1. Assuming that a total of K view angles are preset, k is 1, 2, ..., or K. The k$^{th}$ view angle may be understood as an angle of a lens center point of a camera relative to a model center of the three-dimensional model.

In some embodiments, step S211 may be implemented by the following steps:
Step S2111: Determine a camera direction vector corresponding to the k$^{th}$ view angle.

The camera direction vector corresponding to the k$^{th}$ view angle is determined based on coordinates of a camera lens center and coordinates of a model center of the three-dimensional model. The model center of the three-dimensional model is also a center of a bounding box of the three-dimensional model. The camera direction vector includes an x-axis direction component (x-axis direction), a y-axis direction component (y-axis direction), and a z-axis direction component (z-axis direction). Assuming that the camera direction vector is (a, b, c), the x-axis direction component is a, the y-axis direction component is b, and the z-axis direction component is c.

Step S2112: Determine a first ratio of the y-axis direction component to the z-axis direction component, and determine a second ratio of the x-axis direction component to the z-axis direction component.

Based on the foregoing example, the first ratio is b/c, and the second ratio is a/c.

Step S2113: Determine an arctangent value of the first ratio as the first angle, and determine an arctangent value of an opposite number of the second ratio as the second angle.

Still based on the foregoing example, the first angle is arctan(b/c), and the second angle is arctan(-b/c).

Step S212: Rotate, based on the model information, the three-dimensional model counterclockwise by the first angle in an x-axis direction, and then rotate the three-dimensional model counterclockwise by the second angle in a y-axis direction, to obtain a rotated three-dimensional model.

The rotated three-dimensional model is a model corresponding to a bottom view angle.

The three-dimensional model is rotated counterclockwise by the first angle in the x-axis direction, so that the y-axis direction component in the camera direction changes to 0. Then, the three-dimensional model is rotated counterclockwise by the second angle in the y-axis direction, so that the x-axis direction component in the camera direction changes to 0. That is, the camera faces the +z direction. In this case, the rotated three-dimensional model is the model corresponding to the bottom view angle.

For ease of description, the process of rotating the three-dimensional model is described by using an example in which the three-dimensional model is a cube shown in FIG. 5B. Assuming that a first view angle is a front view angle, a second view angle is a right view angle, and a surface A of the three-dimensional model is seen from the first view angle, it is determined according to the process of implementing step S211 that the first angle is 90 degrees and the second angle is 0 degrees corresponding to the first view angle, and the three-dimensional model is rotated counterclockwise by 90 degrees in the x-axis direction to obtain a rotated three-dimensional model. In this case, the surface A of the three-dimensional model faces the -z direction, that is, the camera faces the +z direction. For the second view angle, a surface B of the three-dimensional model is seen from the second view angle. It is determined according to the process of implementing step S211 that the first angle is 0 degrees and the second angle is 90 degrees corresponding to the second view angle. The three-dimensional model is rotated counterclockwise by 90 degrees in the y-axis direction to obtain a rotated three-dimensional model. In this case, the surface B of the three-dimensional model faces the -z direction, that is, the camera faces the +z direction. In other words, the rotated three-dimensional model is obtained by rotating a part of the three-dimensional model seen from each view angle to the bottom view angle.

Step S213: Determine, based on the rotated three-dimensional model, a three-dimensional lowest envelope of the three-dimensional model at a k$^{th}$ view angle and a two-dimensional projection of the three-dimensional lowest envelope.

In some embodiments, a function for calculating a 3D envelope in CGAL may be called to obtain the three-dimensional lowest envelope of the three-dimensional model and the two-dimensional projection of the three-dimensional lowest envelope. The two-dimensional projection is a projection of the three-dimensional lowest envelope on an xy plane. The two-dimensional projection includes at least one projection face. The projection face is a closed region formed by connecting edges on the two-dimensional projection. Using 112 in FIG. 1B as an example for description, a right side of 112 is a two-dimensional projection. The two-dimensional projection includes two projection faces: a large triangle corresponding to S1 and a small triangle corresponding to S2.

Step S214: Determine a visible region corresponding to each projection face, and determine, based on the visible region corresponding to each projection face, a visible region included in each triangle mesh in the three-dimensional model.

Determining the visible region corresponding to each projection face is determining the visible region of each projection face on a triangle mesh corresponding to the three-dimensional lowest envelope. In some embodiments, the triangle mesh corresponding to each projection face on the three-dimensional lowest envelope is first determined, a vertical line that passes through each vertex on the projection is constructed, and an intersection point of the vertical line and a target plane is determined as a projection point of a vertex of the projection face on the target plane. The target plane is a plane on which a triangle mesh that is in the three-dimensional lowest envelope and that corresponds to the projection face is located, and a connecting line between the vertex of the projection face and the corresponding projection point is perpendicular to the target plane. Then, projection points of each projection face on the corresponding target plane are connected to obtain the visible region corresponding to each projection face. In a case that the projection points on the triangle meshes are connected, if the projection face is a polygon without holes, the plurality of projection points are connected counterclockwise; and if the projection face is a polygon with holes, projection points corresponding to vertexes on an outer boundary of the polygon with holes are connected counterclockwise, and projection points corresponding to vertexes on inner holes are connected clockwise.

Each projection point is a vertex of the visible region. In some embodiments, coordinates of each projection point may be obtained, and the coordinates of the projection point may be determined as coordinates of the vertex of the visible region. In addition, a triangle mesh corresponding to the projection face is a triangle mesh where the visible region is located.

During actual application, each projection face corresponds to one triangle mesh, one triangle mesh may correspond to a plurality of projection faces, each projection face corresponds to one visible region, different visible regions may be located on the same triangle mesh, and therefore one triangle mesh may correspond to a plurality of visible regions. In this embodiment of this application, after the visible region corresponding to each projection face is determined, the visible region included in each triangle mesh in the three-dimensional model may be obtained based on the triangle mesh where the visible region is located. For example, a face F1 corresponds to a visible region R1, a face F2 corresponds to a visible region R2, a face F3 corresponds to a visible region R3, a face F4 corresponds to a visible region R4, ..., and a face F10 corresponds to a visible region R10. The visible regions R1, R2, and R3 are located on the same triangle mesh T1, R4 is located on a triangle mesh T2, R5 and R6 are located on a triangle mesh T3, R7 is located on a triangle mesh T4, and R8, R9, and R10 are located on a triangle mesh T5. In this case, the triangle mesh T1 includes the visible regions R1, R2, and R3, the triangle mesh T2 includes the visible region R4, the triangle mesh T3 includes the visible regions R5 and R6, the triangle mesh T4 includes the visible region R7, and the triangle mesh T5 includes the visible regions R8, R9, and R10.

Step S215: Rotate the visible region included in each triangle mesh clockwise by the second angle in the y-axis direction, and then rotate the visible region included in each triangle mesh clockwise by the first angle in the x-axis direction, to obtain the visible model region corresponding to the $k^{th}$ view angle.

In some embodiments, the rotated three-dimensional model may be rotated clockwise by the second angle in the y-axis direction and then rotated clockwise by the first angle in the x-axis direction, so that the visible region corresponding to each triangle mesh is rotated in an opposite manner to that of step S212. That is, the visible region corresponding to each triangle mesh is rotated clockwise by the second angle in the y-axis direction and then rotated clockwise by the first angle in the x-axis direction. In this case, the model is restored to the state at the $k^{th}$ view angle to obtain the visible model region corresponding to the $k^{th}$ view angle.

Through step S211 to step S215, when the visible model portion of the three-dimensional model at the $k^{th}$ view angle is determined, the three-dimensional model is first rotated by the first angle and the second angle that are determined based on the $k^{th}$ view angle to obtain the rotated three-dimensional model, the rotated three-dimensional model is rotated from the $k^{th}$ view angle to the bottom view angle to determine the three-dimensional lowest envelope corresponding to the $k^{th}$ view angle and the two-dimensional projection corresponding to the three-dimensional lowest envelope, and the visible model portion of each triangle mesh in the three-dimensional model at the $k^{th}$ view angle is determined based on a correspondence between the three-dimensional lowest envelope and the two-dimensional projection, to further provide a necessary data basis for determining the overall visible model portion of the three-dimensional model.

In some embodiments, step S103 "determine a visible model portion corresponding to the three-dimensional model based on the visible model region corresponding to the at least one view angle" may be implemented by the following steps:

Step S1031: Determine whether there is one preset view angle.

When there is one preset view angle, step S1032 is performed. When there are at least two preset view angles, step S1033 is performed.

Step S1032: Determine the visible model region corresponding to the view angle as the visible model portion corresponding to the three-dimensional model.

When there is one preset view angle, the visible model region corresponding to the view angle is directly determined as the visible model portion corresponding to the three-dimensional model.

Step S1033: Obtain a visible region that corresponds to each view angle and that is of an $i^{th}$ triangle mesh in the three-dimensional model.

Herein, i is 1, 2, ..., or N, N is an integer greater than 1, and N is a total number of triangle meshes in the three-dimensional model. Assuming that there are four different view angles, visible regions of the $i^{th}$ triangle mesh at each view angle form a visible region set, respectively V1, V2, V3, and V4. An empty set may exist in V1, V2, V3, and V4.

Step S1034: Merge visible regions that correspond to all view angles and that are of the $i^{th}$ triangle mesh to obtain a merged visible region corresponding to the $i^{th}$ triangle mesh.

In some embodiments, the visible regions that correspond to all the view angles and that are of the $i^{th}$ triangle mesh are first mapped to two-dimensional space and then subjected to a two-dimensional Boolean union operation to obtain a merged region in the two-dimensional space, and the merged region in the two-dimensional space is mapped to three-dimensional space to obtain the merged visible region corresponding to the $i^{th}$ triangle mesh.

Step S1035: Determine merged visible regions corresponding to the first triangle mesh to an $N^{th}$ triangle mesh as the visible model portion corresponding to the three-dimensional model.

Since each triangle mesh on the original three-dimensional model has different occlusion relationships at different view angles, the visible regions of the same triangle mesh at different view angles may either overlap or differ, in other words, may be connected together or may be split apart. To eliminate duplicated regions in a final result, merging the visible regions is merging the visible regions obtained by each triangle mesh at different view angles, to determine the merged visible region of each triangle mesh, ensuring the accuracy of the merged visible region corresponding to each triangle mesh.

In some embodiments, step S1034 "merge visible regions that correspond to all view angles and that are of the $i^{th}$ triangle mesh to obtain a merged visible region corresponding to the $i^{th}$ triangle mesh" may be implemented by the following steps:

Step S341: Transform the visible regions that correspond to all the view angles and that are of the $i^{th}$ triangle mesh into two-dimensional space to obtain two-dimensional visible regions corresponding to the view angles.

In some embodiments, an affine transformation matrix corresponding to the $i^{th}$ triangle mesh may be first determined, and then the $i^{th}$ triangle mesh is projected to the two-dimensional space by the affine transformation matrix. The visible region corresponding to the $i^{th}$ triangle mesh at each view angle is located on the $i^{th}$ triangle mesh. Therefore, projecting the $i^{th}$ triangle mesh to the two-dimensional space is projecting the visible region corresponding to the $i^{th}$ triangle mesh at each view angle to the two-dimensional space, to obtain the two-dimensional visible region corresponding to the $i^{th}$ triangle mesh at each view angle.

Step S342: Merge the two-dimensional visible regions corresponding to the view angles to obtain a merged region corresponding to the $i^{th}$ triangle mesh.

In some embodiments, the two-dimensional visible regions corresponding to the view angles may be merged based on the two-dimensional Boolean operation to obtain the merged region corresponding to the $i^{th}$ triangle mesh. The merged region may be a polygon without holes or may be a polygon with holes.

Step S343: Perform triangulation on the merged region corresponding to the $i^{th}$ triangle mesh to obtain a plurality of two-dimensional triangles.

In this step, performing triangulation on the merged region corresponding to the $i^{th}$ triangle mesh is performing constrained Delaunay triangulation on the merged region. That is, at least one connecting edge of the obtained two-dimensional triangles is a connecting edge on the merged region.

Step S344: Transform the two-dimensional triangles into three-dimensional space to obtain the merged visible region corresponding to the $i^{th}$ triangle mesh.

In some embodiments, the two-dimensional triangles may be transformed into the three-dimensional space based on inverse affine transformation to obtain the merged visible region corresponding to the $i^{th}$ triangle mesh. After merged visible regions corresponding to all the triangle meshes are obtained, the processed three-dimensional model may be generated in subsequent steps based on the vertex coordinates and the vertex indexes of the merged visible regions.

Through step S341 to step S344, the visible regions of the $i^{th}$ triangle mesh at different view angles are merged and then subjected to constrained triangulation, which can ensure that there is no occlusion or overlap in the merged visible region corresponding to the $i^{th}$ triangle mesh.

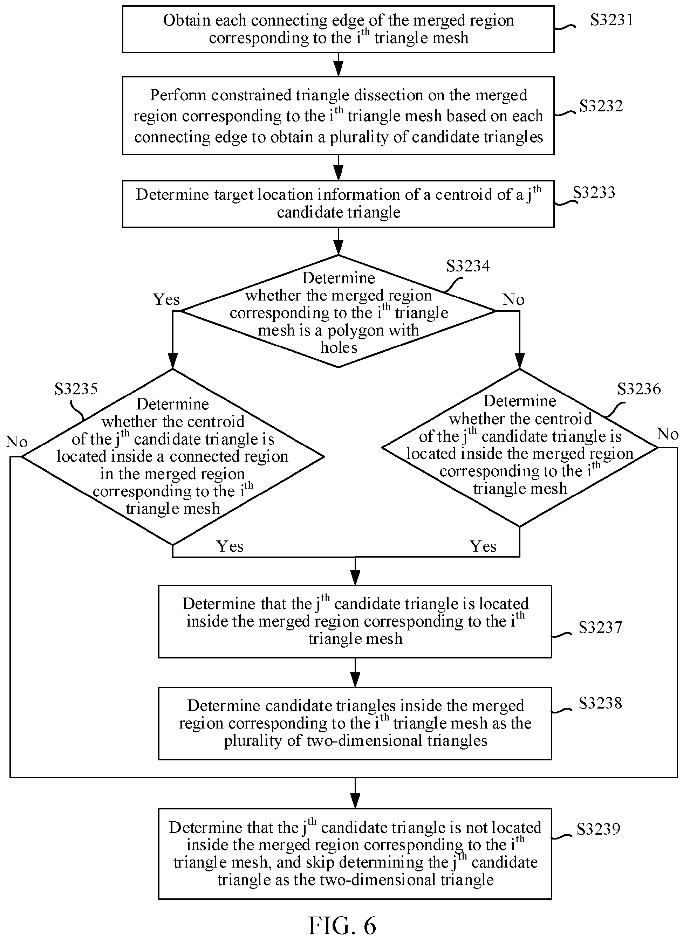

In some embodiments, step S343 "perform triangulation on the merged region corresponding to the $i^{th}$ triangle mesh to obtain a plurality of two-dimensional triangles" may be implemented by step S3431 to step S3437 shown in FIG. 6. The following describes the steps with reference to FIG. 6.

Step S3431: Obtain each connecting edge of the merged region corresponding to the $i^{th}$ triangle mesh.

When the merged region corresponding to the i$^{th}$ triangle mesh is a polygon with holes, connecting edges of the merged region corresponding to the i$^{th}$ triangle mesh include connecting edges on an outer boundary of the polygon and connecting edges of inner holes. When the merged region corresponding to the i$^{th}$ triangle mesh is a polygon without holes, connecting edges of the merged region corresponding to the i$^{th}$ triangle mesh include connecting edges on an outer boundary of the polygon.

Step S3432: Perform constrained triangulation on the merged region corresponding to the i$^{th}$ triangle mesh based on each connecting edge to obtain a plurality of candidate triangles.

For example, each connecting edge may be added into a constrained list, and then a constrained Delaunay triangulation function in CGAL is called based on the constrained list to perform triangulation on the merged region corresponding to the i$^{th}$ triangle mesh to obtain the plurality of candidate triangles. In this case, at least one edge in the candidate triangles is a connecting edge of the merged region.

Step S3433: Determine target location information of a centroid of a j$^{th}$ candidate triangle.

In some embodiments, the target location information of the centroid of the j$^{th}$ candidate triangle may be determined based on coordinates of three vertexes of the j$^{th}$ candidate triangle.

Step S3434: Determine whether the merged region corresponding to the i$^{th}$ triangle mesh is a polygon with holes.

Whether the merged region corresponding to the i$^{th}$ triangle mesh is a polygon with holes may be determined by determining whether other polygons are included inside an outer boundary of the merged region corresponding to the i$^{th}$ triangle mesh. If other polygons are included inside the outer boundary of the merged region, it is determined that the merged region corresponding to the i$^{th}$ triangle mesh is a polygon with holes, and in this case, step S3435 is performed. If no other polygon is included inside the outer boundary of the merged region, it is determined that the merged region corresponding to the i$^{th}$ triangle mesh is a polygon without holes, and in this case, step S3436 is performed.

Step S3435: Determine whether the centroid of the j$^{th}$ candidate triangle is located inside a connected region in the merged region corresponding to the i$^{th}$ triangle mesh.

The connected region in the merged region corresponding to the i$^{th}$ triangle mesh is a region between a connecting edge on an outer boundary and a connecting edge on an inner hole in the merged region. In some embodiments, whether the centroid of the j$^{th}$ candidate triangle is located inside the connected region in the merged region corresponding to the i$^{th}$ triangle mesh may be determined based on the target location information and the connecting edge of the merged region corresponding to the i$^{th}$ triangle mesh, further, based on vertex coordinates of each vertex of the i$^{th}$ triangle mesh and the target location information of the centroid. When the centroid of the j$^{th}$ candidate triangle is located inside the connected region in the merged region corresponding to the i$^{th}$ triangle mesh, step S3437 is performed. When the centroid of the j$^{th}$ candidate triangle is not located inside the connected region in the merged region corresponding to the i$^{th}$ triangle mesh, step S3439 is performed.

Step S3436: Determine whether the centroid of the j$^{th}$ candidate triangle is located inside the merged region corresponding to the i$^{th}$ triangle mesh.

Similar to step S3435, whether the centroid of the j$^{th}$ candidate triangle is located inside the merged region corresponding to the i$^{th}$ triangle mesh may be determined based on the target location information and the connecting edge of the merged region corresponding to the i$^{th}$ triangle mesh, further, based on vertex coordinates of each vertex of the i$^{th}$ triangle mesh and the target location information of the centroid. When it is determined that the centroid of the j$^{th}$ candidate triangle is located inside the merged region corresponding to the i$^{th}$ triangle mesh, step S3437 is performed. When the centroid of the j$^{th}$ candidate triangle is not located inside the merged region corresponding to the i$^{th}$ triangle mesh, step S3439 is performed.

Step S3437: Determine that the j$^{th}$ candidate triangle is located inside the merged region corresponding to the i$^{th}$ triangle mesh.

Step S3438: Determine candidate triangles inside the merged region corresponding to the i$^{th}$ triangle mesh as the plurality of two-dimensional triangles.

Step S3439: Determine that the j$^{th}$ candidate triangle is not located inside the merged region corresponding to the i$^{th}$ triangle mesh, and skip determining the j$^{th}$ candidate triangle as the two-dimensional triangle.

In step S3431 to step S3439, constrained Delaunay triangulation is performed based on each connecting edge of the merged region corresponding to the i$^{th}$ triangle mesh, so that at least one edge of the triangles obtained through dissection is a connecting edge of the merged region, and after the triangulation is performed, it is necessary to further determine whether the triangles obtained through the triangulation are located inside the merged region (connected region), to ensure the accuracy of a triangulation result.

The following describes an exemplary application of the embodiments of this application in an actual application scenario.

The model processing method provided in the embodiments of this application may be applied to two-dimensional model rendering, neural network model training, and other scenarios. An example in which the model processing method provided in the embodiments of this application is applied to two-dimensional model rendering is used for description. A first terminal determines a three-dimensional model of a designed virtual object in response to a received model design operation. In some embodiments, a plurality of three-dimensional models of the virtual object at different view angles may be designed. Then, the first terminal sends the three-dimensional models at different view angles to a server. The server obtains model information at different view angles; determines a visible model region corresponding to each view angle based on model information at each view angle; merges visible model regions corresponding to all the view angles to obtain a visible model portion corresponding to the three-dimensional model; and generates a processed three-dimensional model based on the visible model portion corresponding to the three-dimensional model. The server sends the processed three-dimensional model to the first terminal. The first terminal performs UV unwrapping on the processed three-dimensional model to obtain a two-dimensional unwrapping result of the three-dimensional model, and performs two-dimensional rendering based on the two-dimensional unwrapping result. The processed three-dimensional model includes only the visible region of the model. In this case, the model data volume is reduced compared with the original three-dimensional model. Therefore, two-dimensional rendering needs to be performed only on the visible region, thereby reducing the resource overheads of two-dimensional rendering and increasing the rendering efficiency.

In some embodiments, after completing the design of the three-dimensional models of the virtual object at different view angles, the first terminal may complete a model processing process by itself in response to a received model processing operation, and generate the processed three-dimensional model. Then, UV unwrapping is performed on the processed three-dimensional model to obtain the two-dimensional unwrapping result of the three-dimensional model, and two-dimensional rendering is performed based on the two-dimensional unwrapping result.

By using the model processing method provided in the embodiments of this application, the visible regions of the three-dimensional model at multi-view angles can be extracted based on the 3D envelope, and the processed model can be determined based on the visible regions of the three-dimensional model at the multi-view angles.

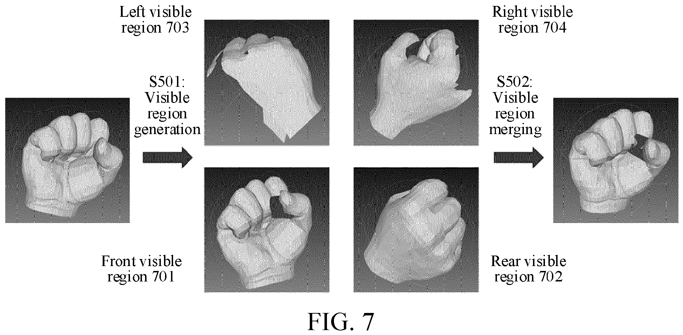

FIG. 7 is another schematic implementation flowchart of a model processing method according to an embodiment of this application. Steps are described below with reference to FIG. 7.

Step S501: Visible region generation.

In some embodiments, based on each given view angle and a three-dimensional model, a visible region that corresponds to each view angle and that is of the three-dimensional model is generated and stored. As shown in FIG. 7, assuming that the given view angles include a front view angle, a rear view angle, a left view angle, and a right view angle, in FIG. 7,701 is a left visible region, 702 is a right visible region, 703 is a front visible region, and 704 is a rear visible region. It can be seen from FIG. 7 that the visible regions at different view angles have both overlapping parts and differing parts.

Step S502: Visible region merging.

In some embodiments, the generated visible regions at different view angles are merged to form a final result. As shown in FIG. 7, the left visible region, the right visible region, the front visible region, and the rear visible region are merged to obtain a final result 705. Regions that are invisible at all the view angles are eliminated in the final result 705.

The following describes the processes of implementing step S501 and step S502.

Step S501 "visible region generation" is the key to the model processing method according to this embodiment of this application. To implement vectorized representation of the visible region, a correspondence between a three-dimensional visible region and a two-dimensional projection may be established by using a 3D envelope implemented in CGAL. The 3D envelope can be computed quickly based on a divide-and-conquer algorithm. A lowest envelope in three-dimensional space is used as an example for description.

First, computing a lowest envelope of a single xy-monotone surface is simple as follows: A boundary of the xy-monotone surface is projected on an xy plane, and a corresponding surface is marked. A group of curved surfaces (not necessarily xy-monotone surfaces) in the three-dimensional space are given, each curved surface is subdivided into a limited quantity of weak xy-monotone surfaces, and a set formed by the weak xy-monotone surfaces is denoted as S . Then, the set is divided into two subsets $S_1$ and $S_2$ of equal size but disjoint, and lowest envelopes of the two subsets are computed recursively. Finally, z values of intersecting regions of the lowest envelopes of the two subsets on the xy plane are calculated, and the smaller one of the z values is selected, to merge the two lowest envelopes with the intersecting regions. The method for computing 3D envelopes based on triangles and spheres in three-dimensional space has been implemented in CGAL, and the implementation in CGAL is directly called in the visible region generation algorithm.

In this embodiment of this application, the implementation process of visible region generation is described by using visible region computing of a front view as an example. A visible region of the front view may be determined through the following steps:

Step S5011: Rotate a model counterclockwise by 90° in an x-axis direction, so that a camera of the front view faces a +z direction.

Step S5012: Call a function for computing a 3D envelope in CGAL to obtain a 3D lowest envelope of the model and a two-dimensional projection of the 3D lowest envelope of the model on an xy plane.

Step S5013: Perform step S5014 to step S5016 for each face F on the two-dimensional projection.

Step S5014: Obtain a triangle T that corresponds to F and that is on the three-dimensional model, and determine a plane P where T is located.

Step S5015: Construct a vertical line L that passes through each vertex on a boundary of F, and determine an intersection point of L and the plane P.

Step S5016: Sequentially connect all intersection points obtained in step S5015, where a region formed by the intersection points on the plane P is a visible region corresponding to F.

Step S5017: Record all visible regions obtained in the foregoing step in triangles on the original model, where all these visible regions form a visible model region in the current view.

Step S5018: Rotate these visible regions clockwise by 90° in an x-axis direction to be restored to the original location.

Visible regions corresponding to a rear view, a left view, and a right view can be obtained by using the similar method (where only a rotation mode needs to be changed).

FIG. 7 shows visible regions of a three-dimensional model at specific view angles (a front view, a rear view, a left view, and a right view). This is because specific view angles are usually preset for original drawings provided by a concept designer during original drawing modeling. The method for extracting the visible region provided in this embodiment of this application is not limited to a specific view angle, but can be extended to any view angle. A camera direction X of any view angle is set to a vector (x, y, z). In this case, when step S5011 is implemented, a first rotation angle $\alpha$ may be determined according to the formula (1-1):

$$\alpha = \arctan(y / z) \tag{1-1}$$

In this formula, arctan() is an arctangent function. Then, the model is rotated counterclockwise by the first rotation angle in the x-axis direction, so that the component y of the camera direction changes to 0.

A second rotation angle $\beta$ is determined according to the formula (1-2):

$$\beta = \arctan(-x / z) \tag{1-2}$$

Then, the model is rotated counterclockwise by the second rotation angle in the y-axis direction, so that the component x of the camera direction changes to 0. In this case, the camera faces the +z direction.

Correspondingly, when step S5018 is implemented, the model is rotated clockwise by $\beta$ in the y-axis direction, and then the model is rotated clockwise by $\alpha$ in the x-axis direction, to be restored to the original angle of the model.

Since a three-dimensional model at any view angle can be processed by using the model processing method provided in the embodiments of this application, the model processing method provided in the embodiments of this application can be widely applied to other related fields. For example, for a three-dimensional building model, if a direct sunlight direction at a time point is given, a visible region of the three-dimensional building model in the direct sunlight direction is determined by using the model processing method provided in the embodiments of this application. The visible region is a lighting region of the three-dimensional building model, which is very conducive to lighting optimization of a building design model. The model processing method provided in the embodiments of this application may also be applied to exhibit optimization of 3D printing: for regions that cannot be seen from a view angle of viewers, the printing resolution can be reduced or hollow processing can be performed, thereby reducing the printing costs of exhibits.

In this embodiment of this application, step S502 "visible region merging" may be implemented by the following steps:

Step S5021: Perform step S5022 to step S5024 for each triangle on the original model.

Step S5022: Assume that the visible regions obtained in step S501 at the front, rear, left, and right view angles are $V_1$, $V_2$, $V_3$, and $V_4$ respectively.

Step S5023: Calculate an affine transformation matrix corresponding to the triangle, and project $V_1$, $V_2$, $V_3$, and $V_4$ onto two-dimensional plane based on the affine transformation matrix to obtain $V_1'$, $V_2'$, $V_3'$, and $V_4'$.

$V_1'$, $V_2'$, $V_3'$, and $V_4'$ may be polygons with holes or may be polygons without holes.

Step S5024: Perform a two-dimensional Boolean operation provided in CGAL to obtain a union of $V_1'$, $V_2'$, $V_3'$, and $V_4'$, to form one or more polygons (with holes).

In some embodiments, the two-dimensional Boolean operation in CGAL may be called to determine a plurality of visible regions of the model on the two-dimensional plane, to obtain one or more polygons (with holes).
Step S5025: Process, by using a constrained Delaunay triangulation method, the polygons (with holes) obtained in step S5024, and record a result.
The recorded result includes vertex coordinates and vertex indexes of each divided triangle.
Each triangle on the original model has different occlusion relationships at different view angles. Therefore, the visible regions of the same triangle at different view angles may either overlap or differ, in other words, may be connected together or may be split apart. To eliminate duplicated regions in a final result, the visible regions corresponding to all the views are first merged and then triangulated. In this case, when step S5025 is implemented, the Delaunay triangulation method needs to be designed for the polygons (with holes) to cope with different special cases. During actual implementation, step S5025 may be implemented by the following steps:

Step S51: Add each edge on an outer boundary and an inner hole of a polygon (with holes) into a constrained list L.

Step S52: Call a constrained Delaunay triangulation method in CGAL based on the constrained list L to perform triangulation on a plane, denoted as T.

Step S53: Determine whether each triangle in T is located inside the polygon (with holes). If the triangle in T is located inside the polygon (with holes), mark the triangle as true. If the triangle in T is not located inside the polygon (with holes), mark the triangle as false.

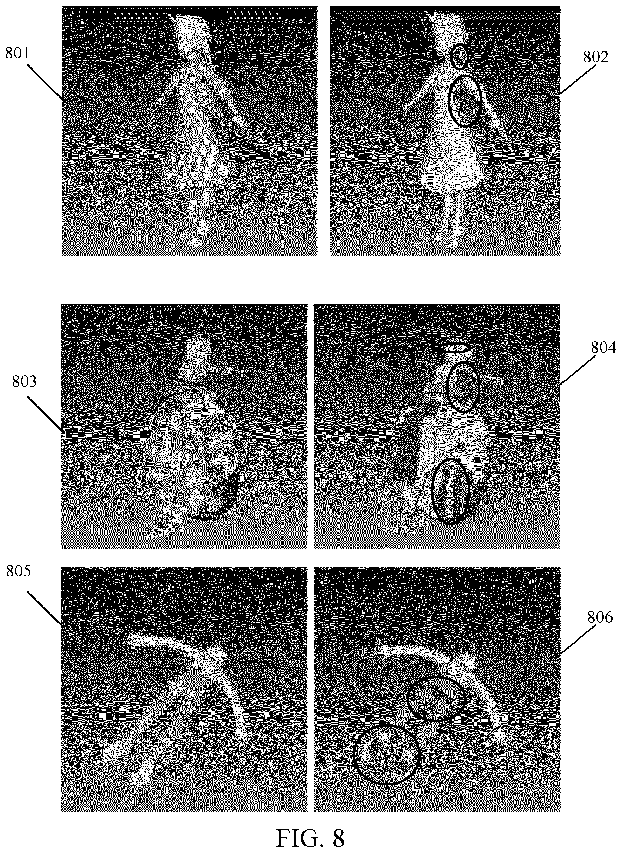

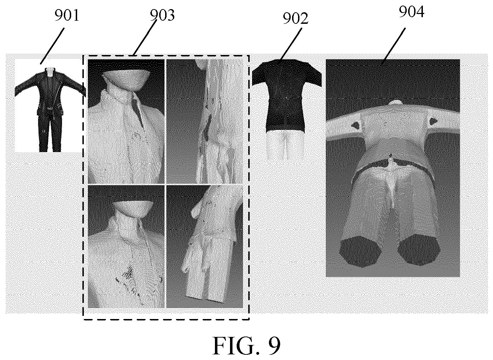

For example, when this step is implemented, a centroid P of the triangle is calculated, and then whether P is inside the polygon (with holes) is determined. If P is inside the polygon (with holes), the original triangle is inside the polygon (with holes). If P is not inside the polygon (with holes), the original triangle is outside the polygon (with holes).
Step S54: Extract all triangles marked as true to obtain a constrained Delaunay triangulation result of the polygon (with holes).
Step S5026: Perform inverse affine transformation on the vertex coordinates of each divided triangle to obtain each corresponding three-dimensional triangle.
Step S5027: Integrate all three-dimensional triangles obtained in step S5022 to step S5026, to generate a three-dimensional model including only visible regions.
In an actual application process, the model processing method provided in the embodiments of this application is tested on a character model set of a game. FIG. 8 shows three exemplary results. 801, 803, and 805 on the left side represent original models. 802, 804, and 806 on the right side represent models obtained by merging visible regions at four view angles: a front view angle, a rear view angle, a left view angle, and a right view angle. For the models in the first two rows, the back neck portion and the left crotch of the female character are invisible regions at the four view angles due to the occlusion of the hair and the left arm. Similarly, the hip and the soles of feet of the male character in the third row are also invisible due to the occlusion. These are in line with user intuition and verify the correctness of the algorithm.
A deep learning-based original drawing reconstruction experiment using the processed model obtained by the model processing method provided in the embodiments of this application is performed based on two-dimensional original drawings 901 and 902 shown in FIG. 9, to obtain reconstruction results shown in 903 and 904 respectively. The invisible regions are eliminated, so that model sampling points can be reduced by 25%, which leads to a 25% reduction in time consuming to generate two-dimensional renderings at multi-view angles. In addition, due to the reduction of complexity and ambiguity of the network output, the convergence of the whole network training is accelerated, and the overall training time is reduced by 25%. Moreover, the reconstruction quality is comparable to the result corresponding to the original data, with a slight improvement.
The following describes an exemplary structure implemented as a software module of the model processing apparatus 443 provided in the embodiments of this application. In some embodiments, as shown in FIG. 3, the software module stored in the model processing apparatus 443 of the memory 440 may include:
a first obtaining module 4431, configured to obtain model information of a to-be-processed three-dimensional model and at least one preset view angle; a first determining module 4432, configured to determine a visible model portion corresponding to the at least one view angle of the three-dimensional model based on the model information; a first merging module 4433, configured to determine a visible model portion corresponding to the three-dimensional model based on the visible model portion corresponding to the at least one view angle; and a model generation module 4434, configured to generate a processed three-dimensional model based on the visible model portion corresponding to the three-dimensional model.

In some embodiments, the first determining module 4432 is further configured to: determine a first angle and a second angle corresponding to a $k^{th}$ view angle; rotate the three-dimensional model counterclockwise by the first angle in an x-axis direction, and then rotate the three-dimensional model counterclockwise by the second angle in a y-axis direction, to obtain a rotated three-dimensional model, the rotated three-dimensional model being a model corresponding to a bottom view angle; determine, based on the rotated three-dimensional model, a three-dimensional lowest envelope of the three-dimensional model at a first view angle and a two-dimensional projection of the three-dimensional lowest envelope, the two-dimensional projection including at least one projection face; determine a visible region corresponding to each projection face, and determine, based on the visible region corresponding to each projection face, a visible region included in each triangle mesh in the three-dimensional lowest envelope; and rotate the visible region corresponding to each triangle mesh clockwise by the second angle in the y-axis direction, and then rotate the visible region corresponding to each triangle mesh clockwise by the first angle in the x-axis direction, to obtain the visible model region corresponding to the $k^{th}$ view angle of the three-dimensional model.

In some embodiments, the first determining module 4432 is further configured to: determine a camera direction vector corresponding to the first view angle, the camera direction vector including an x-axis direction component, a y-axis direction component, and a z-axis direction component; determine a first ratio of the y-axis direction component to the z-axis direction component, and determine a second ratio of the x-axis direction component to the z-axis direction component; and determine an arctangent value of the first ratio as the first angle, and determine an arctangent value of an opposite number of the second ratio as the second angle.

In some embodiments, the first determining module 4432 is further configured to: determine a projection point of a vertex of each projection face on a target plane corresponding to each projection face, the target plane being a plane on which a triangle mesh that is in the three-dimensional lowest envelope and that corresponds to the projection face is located, and a connecting line between the vertex of the projection face and the corresponding projection point being perpendicular to the target plane; and connect projection points of each projection face on the corresponding target plane to obtain the visible region corresponding to each projection face.

In some embodiments, the first merging module 4433 is further configured to: determine, in a case that there is only one preset view angle, a visible model region corresponding to the view angle as the visible model portion corresponding to the three-dimensional model; obtain, in a case that there are at least two preset view angles, a visible region that corresponds to each view angle and that is of an $i^{th}$ triangle mesh in the three-dimensional model, i being 1, 2, ..., or N, N being an integer greater than 1, and N being a total number of triangle meshes in the three-dimensional model; merge visible regions that correspond to all view angles and that are of the $i^{th}$ triangle mesh to obtain a merged visible region corresponding to the $i^{th}$ triangle mesh; and determine merged visible regions corresponding to the first triangle mesh to an $N^{th}$ triangle mesh as the visible model portion corresponding to the three-dimensional model.

In some embodiments, the first merging module 4433 is further configured to: transform the visible regions that correspond to all the view angles and that are of the $i^{th}$ triangle mesh into two-dimensional space to obtain two-dimensional visible regions corresponding to the view angles; merge the two-dimensional visible regions corresponding to the view angles to obtain a merged region corresponding to the $i^{th}$ triangle mesh; perform triangulation on the merged region corresponding to the $i^{th}$ triangle mesh to obtain a plurality of two-dimensional triangles; and transform the two-dimensional triangles into three-dimensional space to obtain the merged visible region corresponding to the $i^{th}$ triangle mesh.

In some embodiments, the first merging module 4433 is further configured to: obtain each connecting edge of the merged region corresponding to the $i^{th}$ triangle mesh; perform constrained triangulation on the merged region corresponding to the $i^{th}$ triangle mesh based on each connecting edge to obtain M candidate triangles, at least one edge of the candidate triangles being the connecting edge of the merged region, and M being an integer greater than 1; and determine candidate triangles inside the merged region corresponding to the $i^{th}$ triangle mesh as the plurality of two-dimensional triangles.

In some embodiments, the apparatus further includes: a second determining module, configured to determine target location information of a centroid of a $j^{th}$ candidate triangle; and a third determining module, configured to determine, in a case that the merged region corresponding to the $i^{th}$ triangle mesh is a polygon without holes, and it is determined, based on the target location information and a connecting edge of the merged region corresponding to the $i^{th}$ triangle mesh, that the centroid of the $j^{th}$ candidate triangle is located inside the merged region corresponding to the $i^{th}$ triangle mesh, that the $j^{th}$ candidate triangle is located inside the merged region corresponding to the $i^{th}$ triangle mesh, j being 1, 2, ..., or M.

In some embodiments, the apparatus further includes: a third determining module, configured to determine, in a case that the merged region corresponding to the i$^{th}$ triangle mesh is a polygon with holes, and it is determined, based on the target location information and the connecting edge of the merged region corresponding to the i$^{th}$ triangle mesh, that the centroid of the j$^{th}$ candidate triangle is located inside a connected region in the merged region corresponding to the i$^{th}$ triangle mesh, that the j$^{th}$ candidate triangle is located inside the merged region corresponding to the i$^{th}$ triangle mesh, the connected region in the merged region corresponding to the i$^{th}$ triangle mesh being a region between a connecting edge on an outer boundary and a connecting edge on an inner hole in the merged region.

The description of the model processing apparatus in the embodiments of this application is similar to the description of the method embodiments, and has beneficial effects similar to the method embodiments. Refer to the description of the method embodiments of this application for technical details undisclosed in the apparatus embodiments.

An embodiment of this application provides a computer program product or a computer program. The computer program product or the computer program includes a computer instruction. The computer instruction is stored in a computer-readable storage medium. A processor of a computer device reads the computer instruction from the computer-readable storage medium. The processor executes the computer instruction to enable the computer device to perform the model processing method according to the embodiments of this application.

An embodiment of this application provides a computer-readable storage medium storing an executable instruction. When the executable instruction is executed by a processor, the processor performs the model processing method provided in the embodiments of this application, for example, the model processing method shown in FIG. 4, FIG. 5A, and FIG. 6.

In some embodiments, the computer-readable storage medium may be a memory such as an FRAM, a ROM, a PROM, an EPROM, an EEPROM, a flash memory, a magnetic surface memory, an optical disc, or a CD-ROM; or may be various devices including one of or any combination of the foregoing memories.

In some embodiments, the executable instruction may be written in the form of program, software, software module, script, or code using any form of programming language (including a compiled or interpreted language, or a declarative or procedural language), and may be deployed in any form, including being deployed as a stand-alone program or being deployed as a module, a component, a subroutine, or another unit suitable for use in a computing environment.

For example, the executable instruction may, but does not necessarily, correspond to a file in a file system and may be stored in a part of a file for saving other programs or data, for example, stored in one or more scripts in a hyper text markup language (HTML) document, stored in a single file dedicated to a program in question, or stored in a plurality of collaborative files (for example, files storing one or more modules, a subprogram, or a code part).

For example, the executable instruction may be deployed on a computing device for execution, or deployed on a plurality of computing devices located at one location for execution, or deployed on a plurality of computing devices distributed at a plurality of locations and interconnected through a communication network for execution.

The foregoing descriptions are merely embodiments of this application, but are not intended to limit the protection scope of this application. Any modification, equivalent replacement, or improvement made within the spirit and scope of this application shall fall within the protection scope of this application.

**Claims**

1. A method for processing a three-dimensional model, executable by a computer device, and the method comprising:

   obtaining model information of the three-dimensional model and at least one pre-set view angle;
   determining, for each of the at least one pre-set view angle, a visible model region of the three-dimensional model based on the model information to obtain at least one visible model region corresponding to the at least one view angle;
   determining a visible model portion corresponding to the three-dimensional model based on the at least one visible model region corresponding to the at least one view angle; and
   generating a processed three-dimensional model based on the visible model portion corresponding to the three-dimensional model.

2. The method according to claim 1, wherein the determining, for each of the at least one view angle, a visible model region of the three-dimensional model based on the model information comprises:

   determining a first angle and a second angle corresponding to a k$^{th}$ view angle, k being a positive integer greater than or equal to 1;
   rotating, based on the model information, the three-dimensional model counterclockwise by the first angle in an x-axis direction, and then rotating the three-dimensional model counterclockwise by the second angle in a y-axis direction, to obtain a rotated three-dimensional model corresponding to a bottom view angle;

determining, based on the rotated three-dimensional model, a three-dimensional lowest envelope of the three-dimensional model at a first view angle and a two-dimensional projection of the three-dimensional lowest envelope, the two-dimensional projection comprising at least one projection face;

determining a visible region corresponding to each of the at least one projection face, and determining, based on the visible region corresponding to each of the at least one projection face, a visible region comprised in each triangle mesh in the three-dimensional lowest envelope; and

rotating the visible region corresponding to each triangle mesh clockwise by the second angle in the y-axis direction, and then rotating the visible region corresponding to each triangle mesh clockwise by the first angle in the x-axis direction, to obtain the visible model region corresponding to the $k^{th}$ view angle of the three-dimensional model.

3. The method according to claim 2, wherein the determining a first angle and a second angle corresponding to a $k^{th}$ view angle comprises:

determining a camera direction vector corresponding to the $k^{th}$ view angle, the camera direction vector comprising an x-axis direction component, a y-axis direction component, and a z-axis direction component;

determining a first ratio of the y-axis direction component to the z-axis direction component, and determining a second ratio of the x-axis direction component to the z-axis direction component; and

determining an arctangent value of the first ratio as the first angle, and determining an arctangent value of an opposite sign of the second ratio as the second angle.

4. The method according to claim 2, wherein the determining a visible region corresponding to each of the at least one projection face comprises:

determining a projection point of a vertex of each projection face on a target plane corresponding to each projection face, the target plane being a plane on which a triangle mesh that is in the three-dimensional lowest envelope and that corresponds to the projection face is located, and a connecting line between the vertex of the projection face and the corresponding projection point being perpendicular to the target plane; and

connecting projection points of each projection face on the corresponding target plane to obtain the visible region corresponding to the respective projection face.

5. The method according to claim 1, wherein the determining a visible model portion corresponding to the three-dimensional model based on the at least one visible model region corresponding to the at least one view angle comprises:

determining, in a case that there is only one view angle, a visible model region corresponding to the view angle as the visible model portion corresponding to the three-dimensional model; or,

obtaining, in a case that there are at least two view angles, a visible region that corresponds to each of the at least two view angles and that is of an $i^{th}$ triangle mesh in the three-dimensional model, i being 1, 2, ..., or N, N being an integer greater than 1, and N being a total number of triangle meshes in the three-dimensional model; merging visible regions that correspond to all view angles and that are of the $i^{th}$ triangle mesh to obtain a merged visible region corresponding to the $i^{th}$ triangle mesh; and determining merged visible regions corresponding to the first triangle mesh to an $N^{th}$ triangle mesh as the visible model portion corresponding to the three-dimensional model.

6. The method according to claim 5, wherein the merging visible regions that correspond to all view angles and that are of the $i^{th}$ triangle mesh to obtain a merged visible region corresponding to the $i^{th}$ triangle mesh comprises:

transforming the visible regions that correspond to all the view angles and that are of the $i^{th}$ triangle mesh into two-dimensional space to obtain two-dimensional visible regions corresponding to the view angles;

merging the two-dimensional visible regions corresponding to the view angles to obtain a merged region corresponding to the $i^{th}$ triangle mesh;

performing triangulation on the merged region to obtain a plurality of two-dimensional triangles; and

transforming the two-dimensional triangles into a three-dimensional space to obtain the merged visible region corresponding to the $i^{th}$ triangle mesh.

7. The method according to claim 6, wherein the performing triangulation on the merged region to obtain a plurality of two-dimensional triangles comprises:

obtaining each connecting edge of the merged region corresponding to the $i^{th}$ triangle mesh;
performing constrained triangulation on the merged region based on each connecting edge to obtain M candidate triangles, at least one edge of the candidate triangles being the connecting edge of the merged region, and M being an integer greater than 1; and
determining candidate triangles inside the merged region as the plurality of two-dimensional triangles.

8.  The method according to claim 6, further comprising:

determining target location information of a centroid of a $j^{th}$ candidate triangle; and
determining, in a case that the merged region corresponding to the $i^{th}$ triangle mesh is a polygon without holes, and it is determined, based on the target location information and a connecting edge of the merged region, that the centroid of the $j^{th}$ candidate triangle is located inside the merged region, that the $j^{th}$ candidate triangle is located inside the merged region, j being 1, 2, ..., or M.

9.  The method according to claim 8, further comprising:

determining, in a case that the merged region corresponding to the $i^{th}$ triangle mesh is a polygon with holes, and it is determined, based on the target location information and the connecting edge of the merged region corresponding to the $i^{th}$ triangle mesh, that the centroid of the $j^{th}$ candidate triangle is located inside a connected region in the merged region, that the $j^{th}$ candidate triangle is located inside the merged region,
the connected region in the merged region being a region between a connecting edge on an outer boundary and a connecting edge on an inner hole in the merged region.

10. An apparatus for processing a three-dimensional model, comprising:

a first obtaining module, configured to obtain model information of the three-dimensional model and at least one pre-set view angle;
a first determining module, configured to determine, for each of the at least one pre-set view angle, a visible model region of the three-dimensional model based on the model information to obtain at least one visible model region corresponding to the at least one view angle;
a first merging module, configured to determine a visible model portion corresponding to the three-dimensional model based on the at least one visible model region corresponding to the at least one view angle; and
a model generation module, configured to generate a processed three-dimensional model based on the visible model portion corresponding to the three-dimensional model.

11. A computer device, comprising:

a memory, configured to store an executable instruction; and
a processor, configured to execute the executable instruction stored in the memory to implement the method according to any one of claims 1 to 9.

12. A computer-readable storage medium, storing an executable instruction, the executable instruction being executed by a processor to implement the method according to any one of claims 1 to 9.

13. A computer program product, comprising a computer program or an instruction, the computer program or the instruction being executed by a processor to implement the method according to any one of claims 1 to 9.

EP 4 390 853 A1

FIG. 1A

FIG. 1B

FIG. 1C

P　　　　　　　　Q

## FIG. 1D

100

2. Determine visible regions of the three-dimensional model at different view angles, and merge the visible regions, to obtain a processed three-dimensional model

Server 400

1. Three-dimensional model

3. Processed three-dimensional model

4. Perform two-dimensional rendering on the processed three-dimensional model

First terminal 200

Second terminal 300

## FIG. 2

Server <u>400</u>

Memory <u>440</u>

| Operating system <u>441</u> |
| Network communication module <u>442</u> |

Network interface <u>420</u>

Processor <u>410</u>

430

Model processing apparatus <u>443</u>

| First obtaining module <u>4431</u> |
| First determining module <u>4432</u> |
| First merging module <u>4433</u> |
| Model generation module <u>4434</u> |

FIG. 3

| Obtain model information of a to-be-processed three-dimensional model and at least one view angle preset | S101 |

↓

| Determine a visible model region corresponding to the at least one view angle of the three-dimensional model based on the model information | S102 |

↓

| Determine a visible model region corresponding to the three-dimensional model based on the visible model region corresponding to the at least one view angle | S103 |

↓

| Generate a processed three-dimensional model based on the visible model region corresponding to the three-dimensional model | S104 |

FIG. 4

Determine a first angle and a second angle corresponding to a $k^{th}$ view angle ⟶ S211

Rotate the three-dimensional model counterclockwise by the first angle in an x-axis direction, and then rotate the three-dimensional model counterclockwise by the second angle in a y-axis direction, to obtain a rotated three-dimensional model ⟶ S212

Determine, based on the rotated three-dimensional model, a three-dimensional lowest envelope of the three-dimensional model at a $k^{th}$ view angle and a two-dimensional projection of the three-dimensional lowest envelope ⟶ S213

Determine a visible region corresponding to each projection face, and determine, based on the visible region corresponding to each projection face, a visible region included in each triangle mesh in the three-dimensional model ⟶ S214

Rotate the visible region included in each triangle mesh clockwise by the second angle in the y-axis direction, and then rotate the visible region included in each triangle mesh clockwise by the first angle in the x-axis direction, to obtain the visible model region corresponding to the $k^{th}$ view angle ⟶ S215

FIG. 5A

FIG. 5B

Obtain each connecting edge of the merged region corresponding to the i$^{th}$ triangle mesh ⟵ S3231

Perform constrained triangle dissection on the merged region corresponding to the i$^{th}$ triangle mesh based on each connecting edge to obtain a plurality of candidate triangles ⟵ S3232

Determine target location information of a centroid of a j$^{th}$ candidate triangle ⟵ S3233

S3234

Determine whether the merged region corresponding to the i$^{th}$ triangle mesh is a polygon with holes

Yes / No

S3235 Determine whether the centroid of the j$^{th}$ candidate triangle is located inside a connected region in the merged region corresponding to the i$^{th}$ triangle mesh

No / Yes

S3236 Determine whether the centroid of the j$^{th}$ candidate triangle is located inside the merged region corresponding to the i$^{th}$ triangle mesh

No / Yes

Determine that the j$^{th}$ candidate triangle is located inside the merged region corresponding to the i$^{th}$ triangle mesh ⟵ S3237

Determine candidate triangles inside the merged region corresponding to the i$^{th}$ triangle mesh as the plurality of two-dimensional triangles ⟵ S3238

Determine that the j$^{th}$ candidate triangle is not located inside the merged region corresponding to the i$^{th}$ triangle mesh, and skip determining the j$^{th}$ candidate triangle as the two-dimensional triangle ⟵ S3239

FIG. 6

Left visible
region 703

S501:
Visible
region
generation

Front visible
region 701

Right visible
region 704

S502:
Visible
region
merging

Rear visible
region 702

FIG. 7

FIG. 8

FIG. 9

# EP 4 390 853 A1

## INTERNATIONAL SEARCH REPORT

International application No.

**PCT/CN2023/087264**

### A. CLASSIFICATION OF SUBJECT MATTER

G06T15/02(2011.01)i

According to International Patent Classification (IPC) or to both national classification and IPC

### B. FIELDS SEARCHED

Minimum documentation searched (classification system followed by classification symbols)

IPC:G06T, G06F

Documentation searched other than minimum documentation to the extent that such documents are included in the fields searched

Electronic data base consulted during the international search (name of data base and, where practicable, search terms used)

CNTXT, USTXT, WOTXT, EPTXT, VCN, VEN, CNKI, IEEE, BING: 可见, 可视, 区域, 三维, 合并, 视角, 视点, 内部, 判断, 多边形, 孔, 三角, 剖分, visual, area, 3D, merg+, view, inside, judg+, polygon, hole, triangle

### C. DOCUMENTS CONSIDERED TO BE RELEVANT

| Category* | Citation of document, with indication, where appropriate, of the relevant passages | Relevant to claim No. |
|---|---|---|
| PX | CN 114742956 A (TENCENT TECHNOLOGY (SHENZHEN) CO., LTD.) 12 July 2022 (2022-07-12) <br> claims 1-13 | 1-13 |
| X | CN 102117500 A (CHINA DIGITAL VIDEO (BEIJING) CO., LTD.) 06 July 2011 (2011-07-06) <br> description, paragraphs [0066]-[0078], claims 4, 6, and figures 2-13 | 1, 5-6, 10-13 |
| A | CN 103067728 A (QINGDAO HISENSE ELECTRIC CO., LTD.) 24 April 2013 (2013-04-24) <br> entire document | 1-13 |
| A | CN 112933599 A (TENCENT TECHNOLOGY (SHENZHEN) CO., LTD.) 11 June 2021 (2021-06-11) <br> entire document | 1-13 |
| A | US 2013069943 A1 (QUALCOMM INC.) 21 March 2013 (2013-03-21) <br> entire document | 1-13 |
| A | CN 113724391 A (BEIJING WODONG TIANJUN INFORMATION TECHNOLOGY CO., LTD. et al.) 30 November 2021 (2021-11-30) <br> entire document | 1-13 |

☐ Further documents are listed in the continuation of Box C.　　☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 June 2023** | **23 June 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/087264**

| Patent document cited in search report | | | Publication date (day/month/year) | Patent family member(s) | | | Publication date (day/month/year) |
|---|---|---|---|---|---|---|---|
| CN | 114742956 | A | 12 July 2022 | None | | | |
| CN | 102117500 | A | 06 July 2011 | None | | | |
| CN | 103067728 | A | 24 April 2013 | None | | | |
| CN | 112933599 | A | 11 June 2021 | None | | | |
| US | 2013069943 | A1 | 21 March 2013 | US | 8902228 | B2 | 02 December 2014 |
| | | | | WO | 2013043270 | A1 | 28 March 2013 |
| CN | 113724391 | A | 30 November 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210648451